# EUROPEAN PATENT APPLICATION

(11) **EP 3 439 312 A1**
(43) Date of publication of application: **06.02.2019**
(21) Application number: 17773757.4
(22) Date of filing: 14.02.2017
(51) Int. Cl.: H04N 21/488, G09G 5/00, H04N 5/20, H04N 21/431, H04N 21/434, H04N 21/2362, H04N 21/81, H04N 21/84, H04N 21/485

(54) **CONTENT PROCESSING DEVICE, TELEVISION RECEPTION DEVICE, METHOD OF PROCESSING INFORMATION IN CONTENT PROCESSING DEVICE, AND PROGRAM**

(30) Priority: 31.03.2016 JP 2016073556
(71) Applicant: Sharp Kabushiki Kaisha, Sakai City, Osaka 590-8522 (JP)
(72) Inventor: YOSHIYAMA Kazuyoshi, Sakai City, Osaka 590-8522 (JP); SAKURAI Ryoji, Sakai City, Osaka 590-8522 (JP); SUZUKI Hideki, Sakai City, Osaka 590-8522 (JP); NISHIGAKI Tomoo, Sakai City, Osaka 590-8522 (JP); FUJINE Toshiyuki, Sakai City, Osaka 590-8522 (JP)
(74) Representative: Müller Hoffmann & Partner
(86) International application number: PCT/JP2017/005304
(87) International publication number: WO 2017/169209

(57) **Abstract**

A content processing device causing a display device connected thereto to output content includes: a first acquisition unit that acquires video luminance information included in the content from service information included in the content; a second acquisition unit that acquires, from the display device, display luminance information in a case where the display device performs display; and an information processing unit that notifies a viewer, who views the content, of information based on the video luminance information and the display luminance information via the display device.

## Description

### Technical Field

An aspect of the present invention relates to a content processing device, a television reception device, a method of processing information in the content processing device, and a program.

This application claims priority based on Japanese Patent Application No. 2016-073556 filed in Japan on March 31, 2016, the content of which is incorporated herein.

### Background Art

In recent years, a method called HDR (High Dynamic Range) in which a maximum luminance value is enhanced has been attracting attention as a technique of enhancing image quality of a video and has been standardized by a standardization body. While maximum luminance of a video is 100 cd/m² in an existing method (SDR: Standard Dynamic Range), the maximum luminance is expanded to 1000 cd/m² or more in the HDR and a luminance range of content is significantly expanded compared to a luminance range of a display. The content here refers to all elements, including data such as a video, sound, or subtitles, that constitute a movie, a broadcast program, or the like. There is also a broadcast reception device that identifies whether a method is an HDR method or an SDR method (refer to PTL 1).

### Citation List

### Patent Literature

PTL 1: Japanese Unexamined Patent Application Publication No. 2009-177706

### Summary of Invention

### Technical Problem

Here, since a display newly treats content of the HDR method, in addition to content of the existing SDR method, as an input video, it is considered to enable clearly indicating, to a user, which of the methods the content that is input to the display has.

However, even contents of the HDR method have different maximum luminance, and only by simply indicating whether to be the HDR method or the SDR method clearly, it is difficult to recognize a characteristic of content. In a case where display luminance of a display that displays HDR content is lower than maximum luminance of the content, processing for compression or saturation of luminance or the like is performed, so that the luminance of the content that is clearly indicated is not reproduced on the display, and inconsistency caused between the clearly indicated luminance and actually displayed luminance is difficult to be recognized.

The display luminance described above is changed by setting of the display in some cases, and there is a possibility that compression, saturation, or the like of the luminance is able to be reduced depending on adjustment of a setting value, but even such adjustment is difficult to be performed unless the inconsistency described above is able to be recognized.

An aspect of the invention is made in view of such circumstances and an object thereof is to provide a content processing device, a television reception device, a method of processing information in the content processing device, and a program that enable recognition of luminance information of content to be displayed and luminance information of a display. Solution to Problem

In order to solve the aforementioned problems, an aspect of the invention is a content processing device causing a display device connected thereto to output content, and the content processing device includes: a first acquisition unit that acquires video luminance information included in the content from service information included in the content; a second acquisition unit that acquires display luminance information in a case where the display device performs display; and an information processing unit that notifies a viewer, who views the content, of information based on the video luminance information and the display luminance information via the display device.

### Advantageous Effects of Invention

As described above, according to the invention, video luminance information included in content and display luminance information are notified via a display device, so that inconsistency between the video luminance information and the display luminance information is able to be easily recognized.

### Brief Description of Drawings

Fig. 1 is a schematic block diagram illustrating a configuration of a broadcasting system according to a first embodiment.
Fig. 2 illustrates an example of a relationship between a signal level and luminance.
Fig. 3 illustrates another example of a relationship between a signal level and luminance.
Fig. 4 is a schematic block diagram illustrating a configuration of a transmission device according to the first embodiment.
Fig. 5 illustrates an example of a data structure of an MPT.
Fig. 6 illustrates an example of a data structure of a video component descriptor.
Fig. 7 illustrates an example of setting of a luminance flag.
Fig. 8 illustrates an example of a data structure of an MH-EIT.
Fig. 9 is a schematic block diagram illustrating a configuration of a reception device according to the first embodiment.
Fig. 10 is a flowchart for explaining an operation of the reception device 10.
Fig. 11 is a conceptual view for explaining an example of information displayed on a display unit 15.
Fig. 12 is a conceptual view illustrating an example of content information displayed on the display unit 15.
Fig. 13 is a conceptual view for explaining another example of display displayed on the display unit 15.
Fig. 14 is a conceptual view for explaining another example of display displayed on the display unit 15.
Fig. 15 is a conceptual view for explaining another example of display displayed on the display unit 15.
Fig. 16 is a conceptual view for explaining another example of display displayed on the display unit 15.
Fig. 17 is a conceptual view for explaining another example of display displayed on the display unit 15.
Fig. 18 is a conceptual view for explaining another example of display displayed on the display unit 15.
Fig. 19 is a conceptual view for explaining another example of display displayed on the display unit 15.
Fig. 20 is a conceptual view for explaining another example of display displayed on the display unit 15.
Fig. 21 is a conceptual view for explaining another example of display displayed on the display unit 15.
Fig. 22 is a conceptual view for explaining another example of display displayed on the display unit 15. Description of Embodiments

Hereinafter, embodiments of the invention will be described with reference to the drawings.

### [First embodiment]

First, an outline of a broadcasting system 1 according to a first embodiment of the invention will be described.

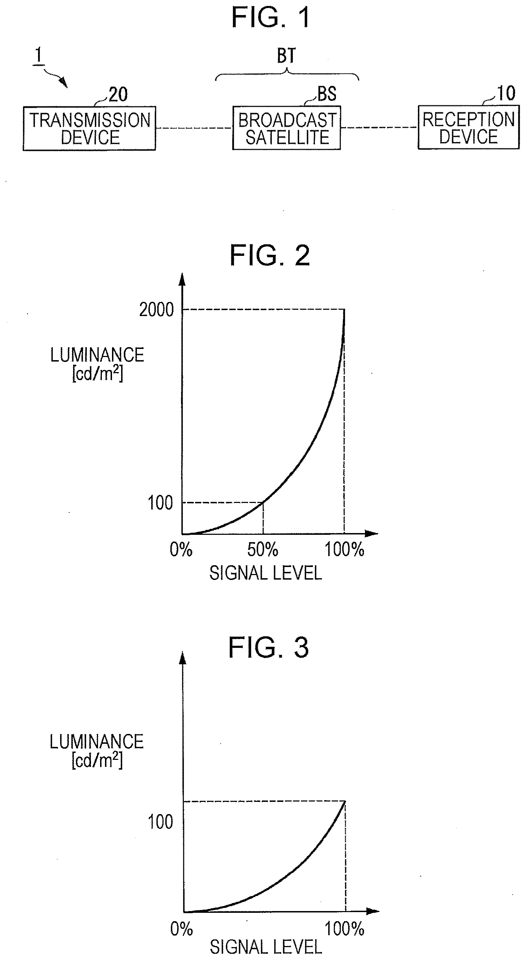

Fig. 1 is a schematic block diagram illustrating a configuration of the broadcasting system 1 according to the present embodiment.

The broadcasting system 1 is configured by including a transmission device 20 and a reception device 10.

The transmission device 20 transmits broadcast program data, which indicates a broadcast program, to a reception device via a broadcasting transfer path BT. The broadcasting transfer path BT is a transfer path through which the broadcast program data is unilaterally and simultaneously transmitted to multiple unspecified reception devices 10. The broadcasting transfer path BT is, for example, a broadcast wave that has a predetermined frequency band. The broadcasting transfer path BT may be configured by including a broadcast satellite BS that relays the broadcast wave. In a part of the broadcasting transfer path BT, a network, for example, a dedicated line or a VPN (Virtual Private Network) may be included. The reception device 10 receives broadcast program data that is transferred via the broadcasting transfer path BT. The reception device 10 displays a video based on video data that constitutes the received broadcast program data. The reception device 10 is electronic equipment, for example, such as a television reception device, that is able to receive the broadcast program data and display a video related to the received broadcast program data. Though the numbers of transmission devices 20 and reception devices 10 are typically multiple, description will be given below by assuming that the respective numbers thereof are one. A case where the broadcasting system 1 uses an MMT (MPEG Media Transport) system as a media transport system is taken as an example.

The broadcasting system 1 is able to broadcast a plurality of broadcast programs in which dynamic ranges of luminance are different from each other. In other words, an HDR broadcast program and an SDR broadcast program are broadcasted in the broadcasting system 1. The HDR broadcast program is a broadcast program in which an HDR video whose luminance range is an HDR is included as a component. The SDR broadcast program is a broadcast program in which an SDR video whose luminance range is an SDR is included as a component. Video data representing the HDR video and video data representing the SDR video are respectively called HDR video data and SDR video data.

### (Luminance of video)

There are two types of luminance; optical luminance and image luminance. The optical luminance is one of physical amounts indicating brightness of a light source. The optical luminance is used for indicating brightness of a display, for example. In the present embodiment, a luminance range of 0 to 2000 cd/m² is referred to as the HDR and a luminance range of 0 to 100 cd/m² is referred to as the SDR, for example. That is, the HDR indicates a wider dynamic range of the optical luminance than that of the SDR. Note that, the luminance ranges of the HDR and the SDR are not limited to the aforementioned ranges, and may be defined as any ranges in accordance with the broadcasting system, for example. Hereinafter, the dynamic range of the optical luminance is simply called a dynamic range in some cases. The image luminance means luminance represented by a signal level indicating brightness of a video or a relative value thereof. In the following description, the optical luminance and the image luminance are called luminance in some cases.

The broadcasting system 1 transfers broadcast program data that includes HDR video data or SDR video data. The HDR video data is constituted by a video format, for example, defined by the SMPTE ST. 2084-2014. This video format is called an HDR format. The HDR format is applicable also to the SDR video data and is used for a UHDTV (Ultra-High Definition Television). As an example, a case where video data is data represented by a color space of YCbCr will be described below. However, a video source may be data represented by another color space of RGB or the like.

In the HDR format, a signal level of the image luminance and the HDR as the luminance range are associated with each other. For example, as illustrated in Fig. 2, in the HDR format, the signal level of the image luminance of 0 to 50% corresponds to the optical luminance of 0 to 100 cd/m², and the signal level of the image luminance of 50 to 100% corresponds to the optical luminance of 100 to 2000 cd/m², for example. Thus, in the HDR video data transferred by the HDR format, the signal level of the image luminance may take a range of 0 to 100%. Hereinafter, a possible range of the signal level for video data is referred to as a level range. In the present example, a minimum value (for example, black level) and a maximum value (for example, nominal peak) of a signal value of each pixel that constitutes the HDR video data respectively correspond to 0% and 100%. In a case where the signal value of each pixel is represented by 10 bits, the signal values of the black level and the nominal peak are respectively 64 and 940, for example.

The SDR video data has a video format defined by the Rec. ITU-R BT. 709, for example. This video format is called an SDR format. The SDR format is used for an HDTV (High Definition Television). In the SDR format, a signal level of the image luminance and the SDR are associated with each other. For example, as illustrated in Fig. 3, in the SDR format, the level range of 0 to 100% corresponds to the optical luminance of 0 to 100 cd/m². The signal level of the image luminance of the SDR video data may take a range of 0 to 100%. In the present example, a minimum value and a maximum value of a signal value of each pixel that constitutes the SDR video data respectively correspond to 0% and 100%. In a case where the signal value of each pixel is represented by 8 bits, the signal values of the black level and the nominal peak are respectively 16 and 235, for example.

In the following description, a case where the optical luminance corresponding to a range of 0 to 50% in the range of the image luminance of the HDR video mainly has a range (0 to 100 cd/m²) of the optical luminance corresponding to the range (0 to 100%) of the image luminance of the SDR video is taken as an example.

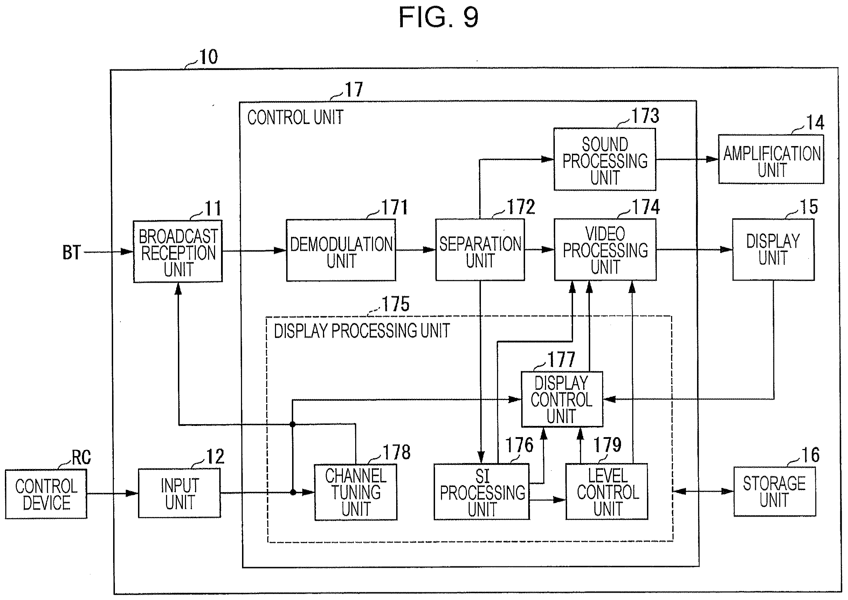

Next, a display unit 15 (Fig. 9) included in the reception device 10 will be described. The display unit 15 may be constituted as a display device separately from the reception device 10. The display unit 15 is a display capable of displaying videos of both the HDR and the SDR as the range of the optical luminance. Specifically, in a case where the signal level of the image luminance in an HDR video signal that is input is 0 to 50 [%], the display unit 15 performs display with the optical luminance of 0 to 100 [cd/m²]. In a case where the signal level is 50 to 100 [%], the display unit 15 performs display with the optical luminance of 100 to 2000 [cd/m²]. Specifically, the display unit 15 performs display with the optical luminance according to the signal level of the image luminance on the basis of an electro optical transfer function (EOTF) exemplified in Fig. 2, for example. The EOTF is a function that describes a correspondence relationship between the signal value of the luminance input to the display and the luminance displayed by the display.

The display unit 15 has a function of measuring luminance of a video displayed on a display panel provided in the reception device 10 and outputting a measurement result to a display control unit 177 as display luminance information. The function may obtain display luminance from video information by calculation or may use a luminance sensor that directly measures display luminance. In a case where the luminance sensor is used, for example, the luminance sensor may be provided at an inconspicuous position (vicinity of any of four corners of a screen or any side of four sides of the screen) on a display surface of the display panel.

### (Outline of processing)

Next, an outline of processing from when video data for a broadcast program is captured till when a video is displayed on the display unit 15 will be described. Here, an example in which an image capturing device (not illustrated) for video data captures subjects SU1 and SU2 and optical luminance of the subject SU1 and optical luminance of the subject SU2 are 50 and 1000 [cd/m²], respectively is taken. While the optical luminance of the subject SU1 is in a range of the SDR, the optical luminance of the subject SU2 exceeds an upper limit of the SDR. As components of broadcast program data, the transmission device 20 transmits captured video data to the reception device 10 as SDR video data or HDR video data. The reception device 10 acquires the video data from the broadcast program data received from the transmission device 20 and outputs the acquired video data to the display unit 15.

In a case where the video data is the SDR video data, a signal level of the subject SU1 is in a range of 0 to 100%. On the other hand, a signal level corresponding to the optical luminance of the subject SU2 exceeds 100% and is thus 100%. Therefore, the display unit 15 displays the subject SU1 with the optical luminance in a range of 50 cd/m², and suppresses the optical luminance with which the subject SU2 is displayed to an upper limit thereof as 100 cd/m².

In a case where the video data is the HDR video data, the signal levels of the subjects SU1 and SU2 are in ranges of 0 to 50% and 50 to 100%. Therefore, the display unit 15 displays the subjects SU1 and SU2, respectively with the optical luminance of 50 and 1000 [cd/m²] equal to the optical luminance obtained through the image capturing.

In this manner, the HDR video displayed by HDR display has a wider luminance range, in which the optical luminance obtained through the image capturing corresponds to a signal level of the image luminance, than that of the SDR video. Thus, the subject SU1 and the subject SU2 are displayed with different optical luminance.

The luminance information here may be the luminance, that is, the aforementioned luminance range of the optical luminance or a contrast ratio. As a reference value, any decided value may be used or the luminance range of the SDR may be used. In a case where the luminance range of the SDR is used, a maximum value in the luminance range of the SDR is used as the reference value, and whether or not the luminance (luminance range) of content has luminance (luminance range) exceeding the maximum value is determined. The content here refers to all elements, for example, including data such as a video, sound, or subtitles, that constitute a movie, a broadcast program, or the like.

### (Configuration of transmission device)

Next, a configuration of the transmission device 20 according to the present embodiment will be described.

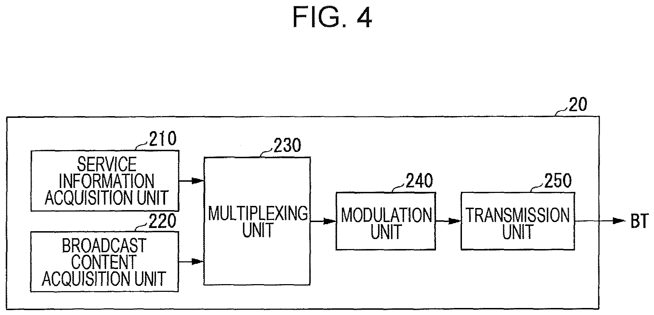

Fig. 4 is a schematic block diagram illustrating the configuration of the transmission device 20 according to the present embodiment.

The transmission device 20 multiplexes broadcast program data and service information and transmits, on a broadcast wave, the multiplexed data obtained through the multiplexing. The transmission device 20 is configured by including a service information acquisition unit 210, a broadcast content acquisition unit 220, a multiplexing unit 230, a modulation unit 240, and a transmission unit 250.

The service information acquisition unit 210 acquires service information. The service information is information about provision of broadcast service, such as a provision form or configuration of a broadcast program. The service information is, for example, MMT-SI (Service Information) in the MMT system. The MMT-SI information includes, for example, an MPT (MMT Package Table) and an MH-EIT (MH-Event Information Table). The MPT is a table that includes information indicating an asset that is a component of the broadcast program, that is, a list of videos or sound, or a providing condition thereof. The MH-EIT is a table that includes information about the program, for example, information indicating a name of the program, a broadcast date and time, explanation for broadcast content, or the like. A luminance flag indicating luminance information of the video to be broadcasted is included in the MPT, for example. In other words, the luminance flag indicates whether the luminance range is the HDR or the SDR. The MH-EIT (MH-Event Information Table) that is a table for transferring information about the program, such as a name of the program, a broadcast date and time, or explanation for broadcast content is included. The service information acquisition unit 210 outputs the acquired service information to the multiplexing unit 230 every given time (for example, 0.1 to 0.5 ms). The service information is updated in accordance with progress of the program, but when not updated, the same service information may be iterated multiple times. Thereby, the broadcast program is able to be presented on the basis of a broadcast signal received at any time point by the reception device 10.

The broadcast content acquisition unit 220 acquires broadcast program data. The broadcast program data is data indicating content of the broadcast program. The broadcast program data includes, for example, video data, sound data, and the like that are provided in the broadcast program. The broadcast content acquisition unit 220 outputs the acquired broadcast program data to the multiplexing unit 230.

The multiplexing unit 230 multiplexes the service information input from the service information acquisition unit 210 and the broadcast program data input from the broadcast content acquisition unit 220 to generate multiplexed data. The multiplexing unit 230 outputs the multiplexed data that is generated to the modulation unit 240.

The modulation unit 240 modulates the multiplexed data input from the multiplexing unit 230, generates a broadcast signal having a predetermined broadcast frequency band, and outputs the generated broadcast signal to the transmission unit 250.

The transmission unit 250 outputs, to the broadcasting transfer path BT, the broadcast signal input from the modulation unit 240. Thereby, the broadcast signal that carries the multiplexed data in which the broadcast program data and the service information are multiplexed is transferred via the broadcasting transfer path BT. The broadcast signal is transferred as a broadcast wave, for example.

### (MPT)

Next, a data structure of an MPT will be described.

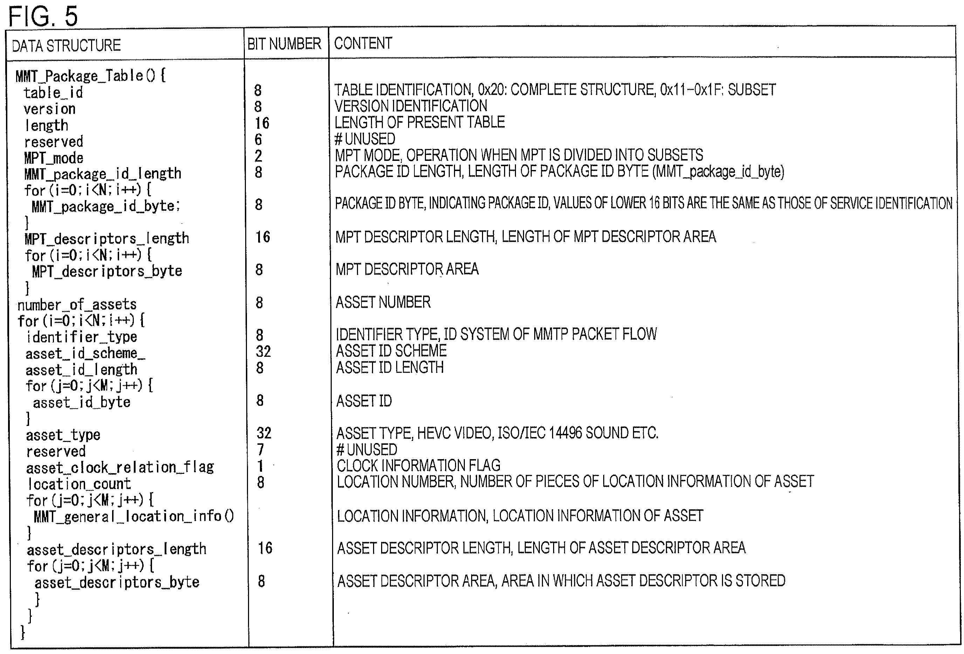

Fig. 5 illustrates an example of the data structure of the MPT. The MPT is configured by including an asset type (asset_type) and an asset descriptor area (asset_descriptors_byte) of each asset. The asset type (asset_type) is information indicating a type of an asset. For example, an asset in which "hvc1" is described as the asset type indicates a video and an asset in which "mp4a" is described as the asset type indicates sound.

The asset descriptor area is an area in which a descriptor describing information about an asset is stored. In the asset descriptor area, a video component descriptor (Video_Component_Descriptor) is described, for example.

### (Video component descriptor)

Next, a video component descriptor will be described.

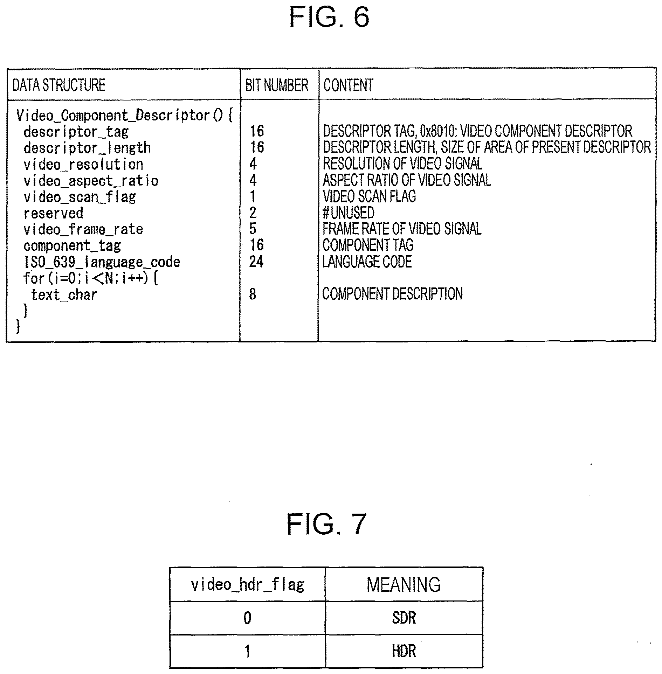

Fig. 6 illustrates an example of a data structure of the video component descriptor. The video component descriptor is a descriptor indicating a parameter or explanation related to a video component. The video component descriptor includes an unused parameter (reserved) and component description (text_char). In the present embodiment, a luminance flag as luminance information is described in either the unused parameter (reserved) or the component description (text_char). With the luminance flag, whether the luminance range of a video to be broadcasted is the HDR or the SDR is specified. Additionally, in the present embodiment, video luminance information indicating a luminance value of content is described in either the unused parameter (reserved) or the component description (text_char). As the video luminance information, HDR content luminance information that is information indicating a luminance value of HDR content is able to be used. As the HDR content luminance information, a substantial maximum luminance value of content for standard maximum luminance, for example, a luminance value of MAXCLL (Maximum Content Light Level) defined by standard of HDMI (registered trademark) (High-Definition Multimedia Interface) 2.0a is able to be used.

### (Luminance flag)

Fig. 7 illustrates an example of setting of a value of the luminance flag.

The luminance flag (video_hdr_flag) has 1-bit information and may have a value of 1 or 0 as exemplified in Fig. 7. The value of 0 indicates that the luminance range is the SDR and the value of 1 indicates that the luminance range is the HDR. The luminance range specified with the luminance flag is set to each of a broadcast program, a segment (also called a session) that constitutes one broadcast program, a CM included in one broadcast program, and the like in some cases.

### (MH-EIT)

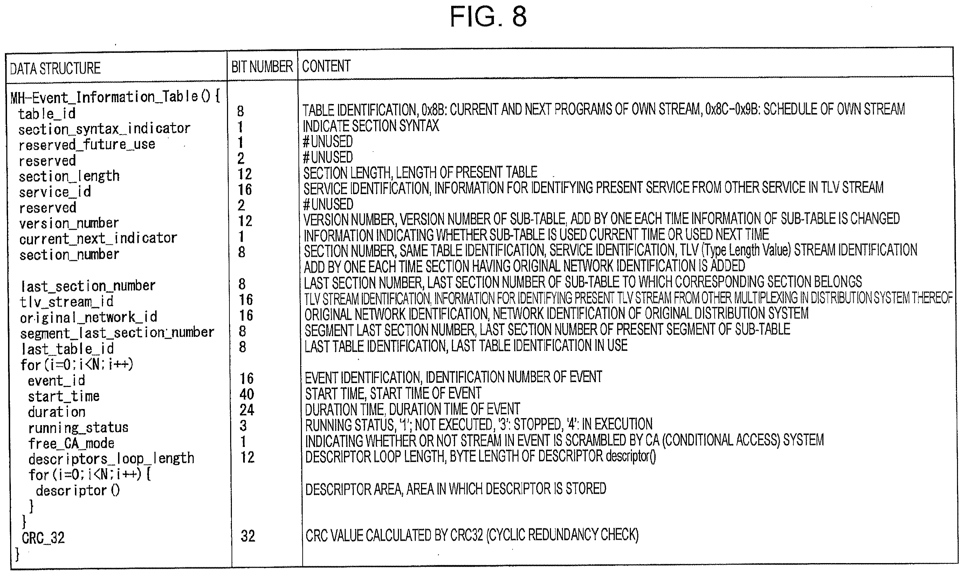

Next, an MH-EIT will be described. Fig. 8 illustrates an example of a data structure of the MH-EIT.

In the example illustrated in Fig. 8, the MH-EIT (MH-Event_Information_Table()) includes an event identification (event_ID), a start time (start_time), and a duration time (duration). The event identification indicates an identification number of an event. Specifically, the event identification indicates identification information of a program, for example. The start time indicates a start time of the event. That is, the start time indicates a start time (date and time) of the program. The duration time indicates a duration time of the event. That is, the duration time indicates a length of broadcast time of the program.

The MH-EIT also includes a descriptor area (descriptor ()) of each event identification. The descriptor area is an area in which a descriptor is stored. The MH-EIT is able to include a video component descriptor, for example. The descriptor area is also able to include an MH-extended event descriptor (MH-Extemded_Event_Descriptor ()). In the MH-extended event descriptor, detailed information about each program is described. The detailed information may include, in addition to a performer, a creator, and the like, information of each segment (also called a session) that is a part of a program, for example, such as a provision start time, a duration time, a luminance flag, and the like.

### (Reception device)

Next, a configuration of the reception device 10 according to the present embodiment will be described.

Fig. 9 is a schematic block diagram illustrating the configuration of the reception device 10 according to the present embodiment.

The reception device 10 is configured by including a broadcast reception unit 11, an input unit 12, an amplification unit 14, the display unit 15, a storage unit 16, and a control unit 17.

The broadcast reception unit 11 receives, among broadcast signals transferred from the transmission device 20 via the broadcasting transfer path BT, a broadcast signal that is transferred on a channel specified by a channel tuning signal from a channel tuning unit 178 of the control unit 17. The broadcast reception unit 11 is configured by including a tuner that receives a broadcast wave, for example. The tuner receives a broadcast wave of a frequency band corresponding to the channel specified by the channel tuning signal. The broadcast reception unit 11 outputs the received broadcast signal to a demodulation unit 171 of the control unit 17.

To the input unit 12, an operation signal generated by an operation of a user is input. The input unit 12 is configured by including a wireless interface that receives an operation signal, for example, from a control device (remote controller) RC in a wireless manner. The operation signal specifies information of on/off of a power supply, a channel on which a broadcast wave is received, a sound volume, luminance, contrast, or the like, for example. The input unit 12 outputs the operation signal to the control unit 17. Note that, the input unit 12 is configured by including a physical member for receiving the operation of the user, for example, such as various buttons and knobs, and may generate an operation signal according to the operation.

The amplification unit 14 reproduces sound based on sound data input from a sound processing unit 173 of the control unit 17. The amplification unit 14 is configured by including a speaker, for example.

The display unit 15 reproduces a video based on video data input from a video processing unit 174 of the control unit 17. The display unit 15 is a display capable of displaying an HDR video based on HDR video data and an SDR video based on SDR video data as described above.

The storage unit 16 stores various data such as setting data used in the control unit 17 and data acquired by the control unit 17. The storage unit 16 is configured by including various storage media such as a RAM (Random Access Memory) and a ROM (Read-only Memory). The storage unit 16 may be configured by including a storage medium (for example, BD (Blu-ray (registered trademark) Disc)) in which received video data of a broadcast program or video data of content of a movie or the like produced in advance is stored. In the storage unit 16, broadcast program data and service information which is multiplexed with the broadcast program data may be stored in association with each other.

The control unit 17 performs various processing related to an operation of the reception device 10. The control unit 17 is configured by including the demodulation unit 171, a separation unit 172, the sound processing unit 173, the video processing unit 174, and a display processing unit 175. The display processing unit 175 is configured by including an SI processing unit 176, a display control unit 177, the channel tuning unit 178, and a level control unit 179. The control unit 17 is configured by including a control circuit such as a CPU (Central Processing Unit). The control unit 17 may realize a function of the demodulation unit 171, the separation unit 172, the sound processing unit 173, the video processing unit 174, the display processing unit 175, or the like by executing processing specified by a command indicated by a control program read from the storage unit 16.

The demodulation unit 171 demodulates a broadcast signal input from the broadcast reception unit 11 and generates multiplexed data. A demodulation technique used by the demodulation unit 171 is a demodulation technique according to a modulation technique used in the modulation unit 240 (Fig. 4). The demodulation unit 171 outputs the multiplexed data that is generated to the separation unit 172.

The separation unit 172 separates broadcast program data and service information from the multiplexed data input from the demodulation unit 171. The separation unit 172 also separates sound data and video data from the broadcast program data. The separation unit 172 outputs the separated sound data to the sound processing unit 173 and outputs the separated video data to the video processing unit 174. The separation unit 172 outputs the separated service information to the display processing unit 175.

The sound processing unit 173 decodes the sound data (that has been coded) input from the separation unit 172 and generates decoded sound data. A sound decoding technique used by the sound processing unit 173 is a sound decoding technique (for example, MPEG-4 audio) according to a coding technique used for coding of the sound data. The sound processing unit 173 outputs the sound data generated by decoding to the amplification unit 14.

The video processing unit 174 decodes the video data (that has been coded), which is input from the separation unit 172, in a luminance range indicated by luminance information input from the SI processing unit 176 and generates decoded video data. A video decoding technique used by the video processing unit 174 is a video decoding technique (for example, HEVC: High Efficiency Video Coding) according to a coding technique used for coding of the video data. In the following description, a video indicated by the video data input from the separation unit 172 is called a broadcast video in some cases.

In accordance with an instruction from the display control unit 177, the video processing unit 174 causes the display unit 15 to display information based on the video luminance information and the display luminance information that are acquired by the SI processing unit 176. When causing the display unit 15 to display the information based on the video luminance information and the display luminance information on a screen on which information about content is displayed, the video processing unit 174 combines the information based on the video luminance information and the display luminance information with a screen of video data obtained from the separation unit 172 to display the resultant on the display unit 15. When displaying the combined information on the display unit 15, the video processing unit 174 is also able to perform combining so that an OSD (On-screen display) screen that includes the information based on the video luminance information and the display luminance information is displayed on the screen of the video data.

In a case where luminance of the video data is higher than a reference value as a result of determination of the level control unit 179, the video processing unit 174 is able to recognize that the video data has the HDR.

For a pixel whose signal level is in a luminance range indicated by luminance range setting input from the level control unit 179 among pixels indicated by the video data, the video processing unit 174 keeps the signal level without change. For a pixel whose signal level is greater (or smaller) than the luminance range indicated by the luminance range setting input from the level control unit 179 among pixels indicated by the video data, the video processing unit 174 defines the signal level as a maximum value (or a minimum value) of the signal level of each luminance range. The video processing unit 174 outputs video data that indicates the adjusted video to the display unit 15.

The display processing unit 175 performs processing related to display of a video. The display processing unit 175 is configured by including the SI processing unit 176, the display control unit 177, the channel tuning unit 178, and the level control unit 179.

The SI processing unit 176 analyzes service information input from the separation unit 172. Specifically, the SI processing unit 176 extracts a video component descriptor of an MPT from the service information and acquires luminance information by referring to a value set to a luminance flag. For example, from the service information of content, the SI processing unit 176 acquires video luminance information of a video included in the content and acquires display luminance information indicating luminance that is able to be displayed by the display unit.

The SI processing unit 176 outputs the acquired luminance information to the video processing unit 174, the display control unit 177, and the level control unit 179. The SI processing unit 176 extracts an MH-EIT from the service information and outputs program information indicated by the extracted MH-EIT to the display control unit 177 and the level control unit 179.

The display control unit 177 controls whether to display a graphic screen to be displayed on the display unit 15, acquisition or changing of the graphic screen, and the like on the basis of one or both of the operation signal from the input unit 12 and the information from the SI processing unit 176. The graphic screen is able to include information based on the video luminance information (metadata) and the display luminance information that are obtained from the SI processing unit 176. Display luminance data obtained by measuring luminance of a display panel in the display unit 15 is acquired and the display luminance data is used for the display luminance information or, in a case where display luminance data is stored in advance in the storage unit 16 in the reception device 10 (for example, in the storage unit 16), the display luminance data is read and used for the display luminance information.

As the graphic screen, for example, an OSD screen is also able to be used. For example, by outputting the graphic screen to the video processing unit 174, the display control unit 177 is able to cause the video processing unit 174 to combine a video signal with the OSD screen and cause the display unit 15 to display the resultant.

The channel tuning unit 178 identifies a channel, on which a broadcast signal is received, by the operation signal input from the input unit 12. The channel tuning unit 178 generates a channel tuning signal to specify the identified channel and outputs the generated channel tuning signal to the broadcast reception unit 11.

The level control unit 179 controls a signal level of the broadcast video on the basis of luminance information and program information that are input from the SI processing unit 176. The level control unit 179 determines whether or not the luminance of video data included in the broadcast program data is higher than a reference value on the basis of the luminance information input from the SI processing unit 176.

Note that, the video data transmitted by the transmission device 20 may be obtained by multiplying a signal value by an OETF (Opto-Electronic Transfer Function) in advance in order to offset characteristics of the EOTF (reference EOTF) in a specific display device. The level control unit 179 uses a predetermined correction coefficient to correct a signal value that is limited, so that a last output value (luminance) from the display unit 15 has a constant magnification with respect to an original input value of the video data. The correction is called gamma correction in some cases. The correction coefficient may be provided as a conversion table indicating a relationship between the input value and the output value. The correction coefficient may be different between the SDR and the HDR.

The level control unit 179 uses a correction coefficient corresponding to a signal value whose maximum value is limited and corrects the signal value.

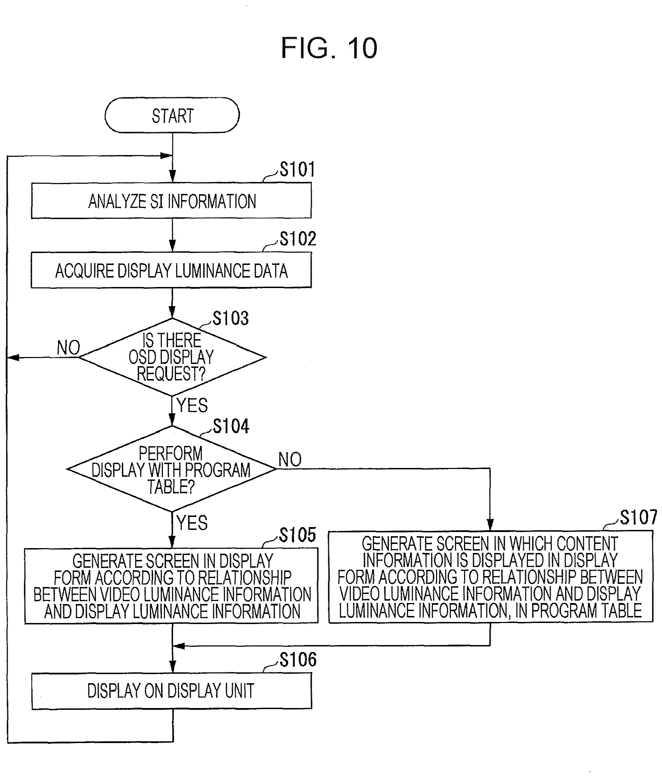

Next, an operation of the reception device 10 according to the present embodiment will be described with reference to a flowchart of Fig. 10.
(Step S101) The separation unit 172 separates service information from multiplexed data that is carried by a broadcast signal that is received. The SI processing unit 176 analyzes the separated service information to acquire luminance information and program information. Then, the procedure proceeds to processing of step S102.
(Step S102) Upon acquisition of the luminance information obtained from the SI processing unit 176, the display control unit 177 acquires display luminance data obtained from the display unit 15 or the storage unit 16.
(Step S103) The display control unit 177 determines whether or not there is an OSD display request. The determination for the OSD display request is performed in accordance with whether or not a signal indicating that a button for instructing to perform OSD display is pressed is input from the control device RC via the input unit 12. When there is no OSD display request, the display control unit 177 returns to the processing of step S101, and when there is the OSD display request, the display control unit 177 shifts to processing of step S104.
(Step S104) In a case where the OSD display request is input, the display control unit 177 further determines whether or not to perform display with a program table. For example, in a case where the display request of an OSD screen is a request to display a program table (electronic program table), the display control unit 177 shifts to processing of step S105, and in a case where the display request is not the request to display a program table (electronic program table) but a request to display information about content to be displayed on the display unit 15, the display control unit 177 shifts to processing of step S107.
(Step S105) On the basis of video luminance information and display luminance data, the display control unit 177 generates a luminance information display screen in a display form according to a relationship between the video luminance information and the display luminance data and outputs the resultant to the video processing unit 174.
(Step S106) The video processing unit 174 combines the luminance information display screen or a program display screen, which is obtained from the display control unit 177, with video data obtained from the separation unit 172 and causes the display unit 15 to display the resultant.
(Step S107) The display control unit 177 generates a program table screen in which content information is displayed in a display form according to a relationship between the video luminance information and the display luminance data, in a program table.

Next, an example of information displayed on the display unit 15 of the reception device 10 will be described.

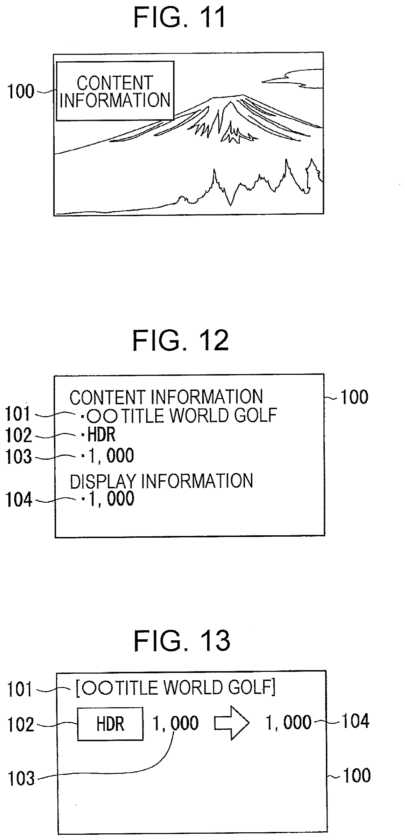

Fig. 11 is a conceptual view for explaining an example of information displayed on the display unit 15. The display unit 15 displays a screen in which content information 100 is combined with a screen displaying video data. An example of the content information includes information including various information about content displayed on the display unit 15 currently.

Fig. 12 is a conceptual view illustrating an example of content information displayed on the display unit 15. The content information 100 includes a content name 101, format information 102 indicating whether content has an HDR method or an SDR method, content luminance information 103 representing luminance of the content, and display luminance information 104 representing luminance that is able to be displayed by a display (display unit 15). As illustrated in the figure, the format information 102 and the content luminance information 103 are displayed with text (characters) on a screen as information according to video luminance information, and the display luminance information 104 is displayed with text on the screen as display luminance information. Here, the display is performed that a program of "○○ title world golf" corresponds to the HDR method and has brightness of 1000 cd/m² and the display is further performed that display luminance is 1000 cd/m². When such information is combined with the screen of content and displayed, a user is able to recognize that the luminance of the content matches the luminance that is able to be displayed by the display.

Fig. 13 is a conceptual view for explaining another example of display displayed on the display unit 15. The display control unit 177 generates a screen on which the content name 101 is displayed and the format information 102, the content luminance information 103, and the display luminance information 104 for the content are displayed in the content information 100. Here, an icon having a shape of an arrow directed from the content luminance information 103 to the display luminance information 104 is added between the content luminance information 103 and the display luminance information 104. Thereby, the display unit 15 is able to perform display so as to make it clear to the user that the display is performed with the content luminance information 103 as 1000 cd/m² and the display luminance information 104 as 1000 cd/m².

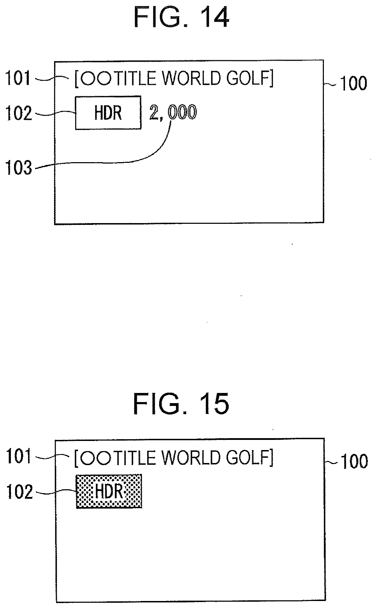

Fig. 14 is a conceptual view for explaining another example of display displayed on the display unit 15. In the example, the display control unit 177 performs display in a display form according to a magnitude relationship between luminance of content luminance information and display luminance information. As the display form according to the magnitude relationship between the luminance of the content luminance information and the display luminance information, the content name 101, the format information 102, and the content luminance information 103 are displayed in the content information 100 in the example. In this case, the display control unit 177 compares the content luminance information and the display luminance information, and when the luminance represented by the content luminance information is larger than the luminance represented by the display luminance information, the display control unit 177 displays the content luminance information 103 in a first display color, and when the luminance represented by the display luminance information is equal to or less than the luminance represented by the content luminance information, the display control unit 177 displays the content luminance information 103 in a second display color. Any colors may be used for the first display color and the second display color as long as being different colors. The first display color is red and the second display color is blue, for example. By displaying the content luminance information 103 in the display color according to the magnitude relationship between the content luminance information and the display luminance information as described above, it is possible to perform the display so that the relationship between the content luminance information 103 and the display luminance information is clear. Though a case where the content luminance information 103 is displayed in a different color in accordance with a result of the comparison between the content luminance information and the display luminance information has been described in the figure, the display luminance information may be displayed in a different color in accordance with the result of the comparison between the content luminance information and the display luminance information. Moreover, the display colors are not limited to red and blue and display may be performed in other colors as long as the comparison result is able to be recognized.

Fig. 15 is a conceptual view for explaining another example of display displayed on the display unit 15. In the example, for performing display in a display format according to a magnitude relationship between luminance of content luminance information and display luminance information, the display control unit 177 performs the display by changing a display form in which the format information 102 is displayed. Specifically, the display control unit 177 displays the content name 101 and the format information 102 in the content information 100. The format information 102 is displayed in the display form according to the magnitude relationship between the luminance of the content luminance information and the display luminance information. In the example, the display control unit 177 compares the content luminance information and the display luminance information, and when the luminance represented by the content luminance information is larger than the luminance represented by the display luminance information, the display control unit 177 displays the format information 102 in a first display color, and when the luminance represented by the display luminance information is equal to or less than the luminance represented by the content luminance information, the display control unit 177 displays the format information 102 in a second display color. Any colors may be used for the first display color and the second display color as long as being different colors. The first display color is red and the second display color is blue, for example. In the display of the format information 102, characters of "HDR" or "SDR" may be displayed in a color according to a comparison result or a background in which characters of "HDR" or "SDR" are displayed may be displayed in a color according to the comparison result. By displaying the format information 102 in the display color according to the magnitude relationship between the content luminance information and the display luminance information as described above, it is possible to perform the display so that the relationship between the content luminance information 103 and the display luminance information is clear. The display colors are not limited to red and blue and display may be performed in other colors as long as the comparison result is able to be recognized.

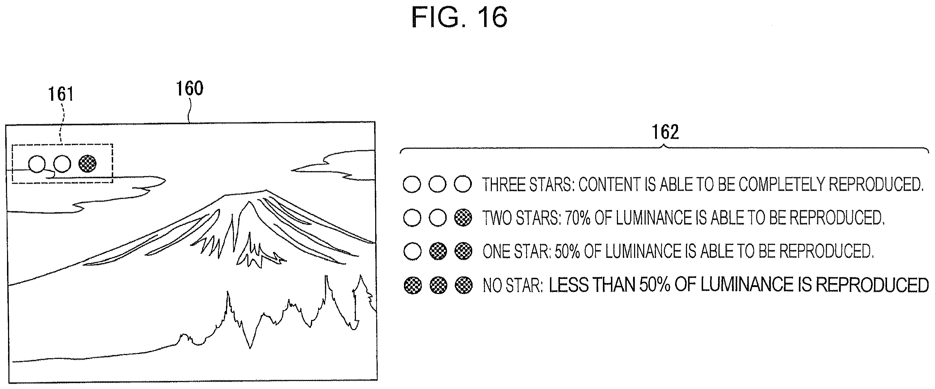

Fig. 16 is a conceptual view for explaining another example of display displayed on the display unit 15. In the example, the display control unit 177 generates a luminance information display screen in which display is performed in a different display form depending on a ratio (reproducibility) of display luminance information relative to content luminance information. The display control unit 177 causes the video processing unit 174 to combine a screen of video data 160 with a luminance information display screen 161, and causes the display unit 15 to display the resultant combined screen.

The luminance information display screen 161 is a screen in which, for example, predetermined figures (figures, such as stars, circles, or quadrangle, or symbols) are displayed side by side and is displayed in a display form in which colors of the figures are differentiated depending on the ratio of the display luminance information relative to the content luminance information. The display control unit 177 decides the number of figures whose color is changed depending on the ratio of the display luminance information relative to the content luminance information among the predetermined plurality of figures displayed on the luminance information display screen 161, generates the luminance information display screen 161 in which the color of the decided number of figures is changed, and causes the video processing unit 174 to combine the luminance information display screen 161 with video data and the display unit 15 to display the resultant. Though a case where the number of predetermined figures to be displayed is three is described in Fig. 16, the number may be another number as long as being multiple. In a case where the ratio of the display luminance information relative to the content luminance information is 100%, all the three predetermined figures are displayed in a second display color (for example, blue), and in a case where the ratio of the display luminance information relative to the content luminance information is in a range of less than 100% and 70% or more, two of the predetermined figures are displayed in the second display color and the other one is displayed in a first display color (for example, red). In a case where the ratio of the display luminance information relative to the content luminance information is in a range of less than 70% and 50% or more, one of the predetermined figures is displayed in the second display color and the other two are displayed in the first display color. In a case where the ratio of the display luminance information relative to the content luminance information is less than 50%, all the three predetermined figures are displayed in the first display color (reference numeral 162). In Fig. 16, in the luminance information display screen 161, two of the predetermined figures are displayed in the second display color and the other one is displayed in the first display color, so that it is clearly displayed that the ratio of the display luminance information relative to the content luminance information is in a range of less than 100% and 70% or more.

In Fig. 16, while a plurality of predetermined figures are displayed, a predetermined figure is displayed with a color changed depending on the ratio of the display luminance information relative to the content luminance information, but display may be performed in such a manner that one predetermined figure is displayed and a display size of the predetermined figure is changed depending on the ratio. For example, the size of the predetermined figure may increase as the ratio of the display luminance information relative to the content luminance information is closer to 100% and the size may decrease as the ratio is closer to 0%. In order to make it clear that the size is different, in a case where the ratio is 100%, an interior of the predetermined figure may be all displayed in the second display color, and in a case where the ratio is less than 100%, a proportion of an area displayed in the first display color relative to an area displayed in the second display color in the figure with a size when the ratio is 100% may be changed. For example, in a case where the ratio of the display luminance information relative to the content luminance information is 50%, a half of the predetermined figure may be displayed in the first display color and the other half may be displayed in the second display color.

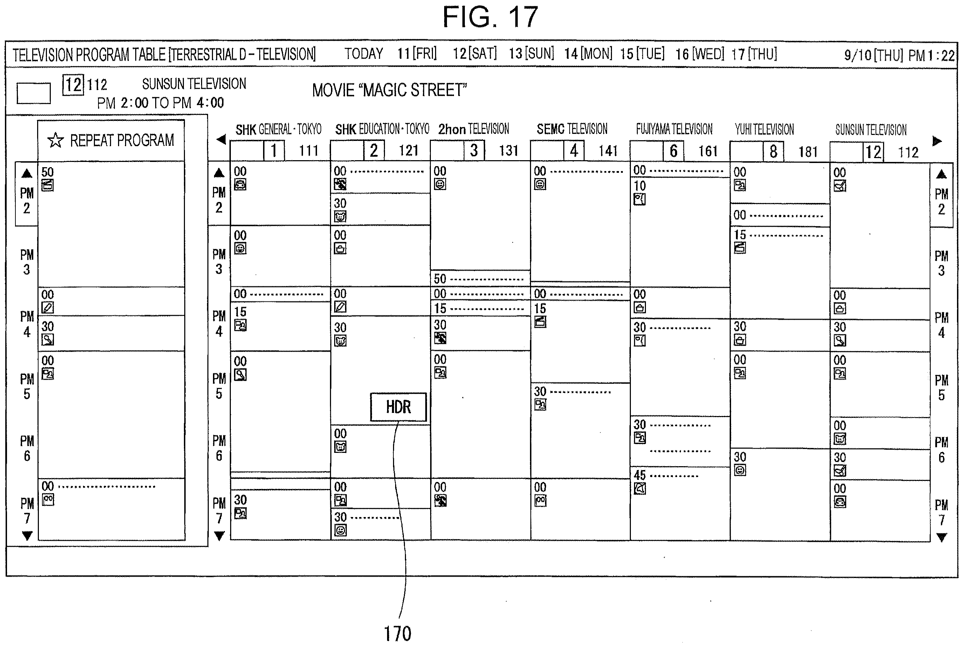

Fig. 17 is a conceptual view for explaining another example of display displayed on the display unit 15. In the example, the display control unit 177 causes the display unit 15 to display, with a program table, information according to content luminance information and display luminance information. The program table in the figure is displayed in such a layout that a luminance information display screen (for example, reference numeral 170) according to a magnitude relationship between the content luminance information and the display luminance information falls within a region of a section of the program table, in which explanation of content thereof is given. Here, the display control unit 177 causes format information to be displayed in a display form (different color) according to the magnitude relationship between luminance of the content luminance information and the display luminance information. Since processing for deciding the display form by the display control unit 177 is similar to that in the aforementioned example (for example, Fig. 15), the description thereof will be omitted.

Though a case where the luminance information display screen 170 is displayed for one program is described in the figure, comparison to display luminance information may be performed also for another program and a luminance information display screen according to a result of the comparison may be displayed, as long as service information is able to be acquired.

According to such an example, a luminance information display screen is able to be displayed for content to be broadcasted in the future or for each content of a plurality of channels, so that, when selecting or checking a program to view, the luminance information display screen is able to be checked together.

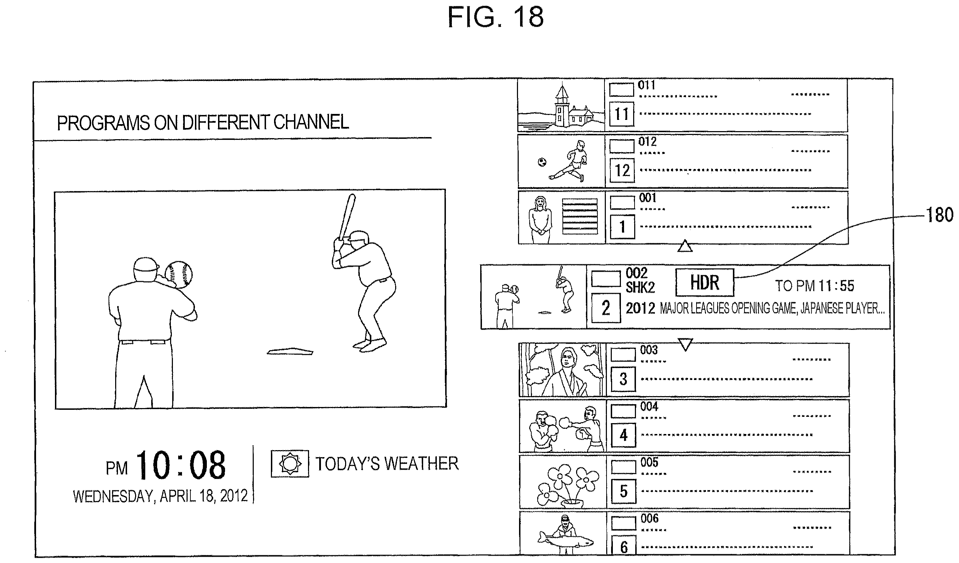

Fig. 18 is a conceptual view for explaining another example of display displayed on the display unit 15. In the example, the display control unit 177 causes the display unit 15 to display information according to content luminance information and display luminance information together with a table of programs on different channel that is arranged side by side in a display screen where current content is displayed. Here, content (a program of a channel that is selected) to be displayed is displayed in a part of a region of the display screen of the display unit 15 and content information of programs on different channel (or programs including the content being displayed and programs on different channel) is displayed in the remaining region. A luminance information display screen (for example, reference numeral 180) is displayed in the content information of programs on different channel. Thereby, a luminance information display screen is able to be displayed not only for the content being displayed but also for content of other channels which are currently broadcasted.

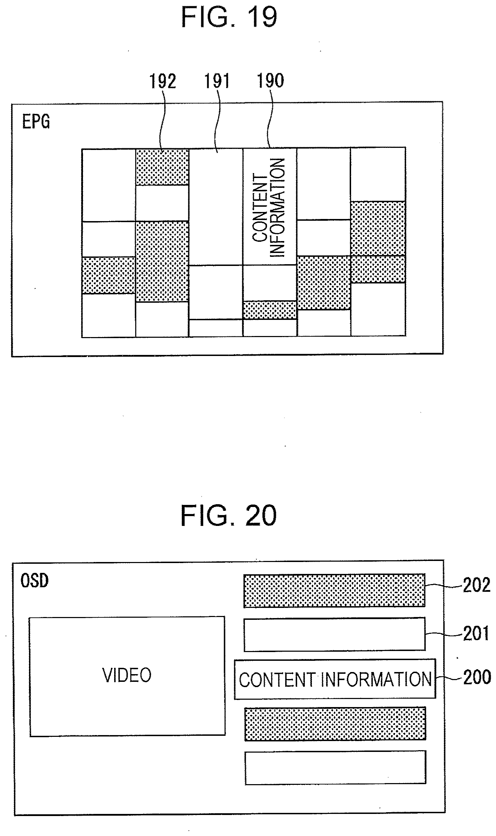

Fig. 19 is a conceptual view for explaining another example of display displayed on the display unit 15. In the example, when displaying information according to content luminance information and display luminance information in a program table, the display control unit 177 performs the display by changing display colors of sections (regions) corresponding to respective content information. The display control unit 177 compares content luminance information of the content information of each content in the program table that is displayed to the display luminance information in a program table 190, calculates each reproducibility, and changes a display color of a section in accordance with a result of the calculation. For example, content information whose reproducibility is 70% or more is displayed with a display color of a section (for example, section 191) as a second display color (for example, white), and content information whose reproducibility is less than 70% is displayed with a display color of a section (for example, section 192) as a first display color (for example, gray). Since processing for calculating the reproducibility by the display control unit 177 is similar to that in the aforementioned example (for example, Fig. 16), the description thereof will be omitted.

Thereby, a program table is also able to be displayed so that a relationship between the content luminance information and the display luminance information is clear to the user. Here, since each content information is represented in each color of a background where the content information is displayed, only by checking the color, the relationship between the content luminance information and the display luminance information is able to be intuitively recognized.

Fig. 20 is a conceptual view for explaining another example of display displayed on the display unit 15. In the example, the display control unit 177 causes the display unit 15 to display information according to content luminance information and display luminance information by changing a background color of a table of programs on different channel arranged side by side in a display screen where current content is displayed. While a luminance information display screen is displayed with characters when content information of programs on different channel is displayed in Fig. 18, the luminance information display screen is displayed not with characters but by changing a background color of content information of programs on different channel in the example illustrated in Fig. 20. For example, as to content information (for example, reference numeral 200) in programs on different channel, the display control unit 177 compares content luminance information of each content in programs on different channel that are displayed to the display luminance information, calculates each reproducibility, and changes a display color of a section in accordance with a result of the calculation. For example, content information whose reproducibility is 70% or more is displayed with a display color of a section (for example, section 201) as a second display color (for example, white), and content information whose reproducibility is less than 70% is displayed with a display color of a section (for example, section 202) as a first display color (for example, gray). Thereby, programs on different channel are also able to be displayed so that a relationship between the content luminance information and the display luminance information is clear to the user.

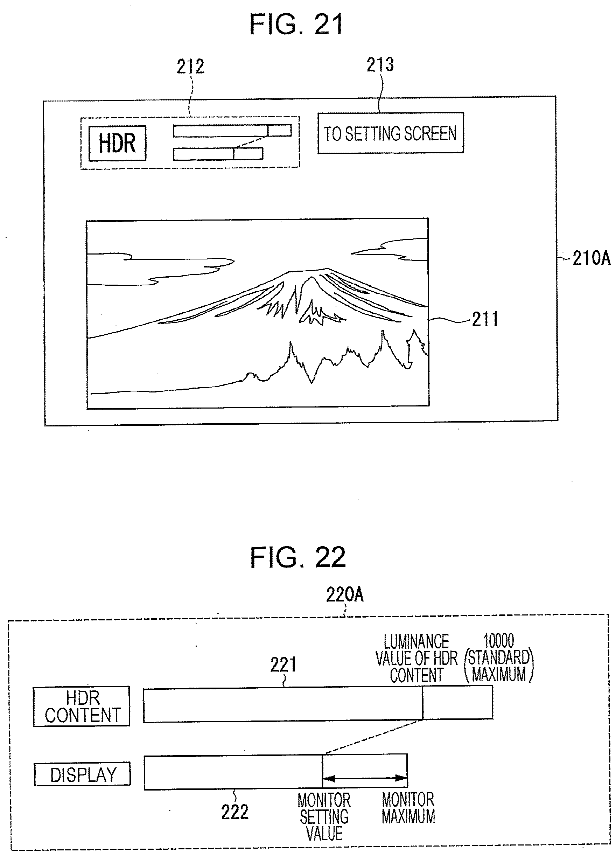

Figs. 21 and 22 are conceptual views for explaining another example of display displayed on the display unit 15. In Fig. 21, the display control unit 177 causes video data 211 to be displayed in a lower part of a display screen 210A of the display unit 15 and a luminance information display screen 212 and a setting screen call-up button 213 to be displayed in an upper part of the display screen 210A. In the luminance information display screen 212, format information (here, "HDR" as an example) of content (video data 211) that is currently displayed and a figure that indicates a relationship between a luminance value of the content and a luminance value of the display are displayed. By referring to the figure that indicates the relationship between the luminance value of the content and the luminance value of the display and pressing the setting screen call-up button 213 via the control device RC or the like as necessary, the user is able to change a setting value of luminance displayed by the display unit 15.

With reference to Figs. 21 and 22, the relationship between the luminance value of the content and the luminance value of the display will be further described. In a luminance information display screen 220A, information (for example, "HDR content") representing format information in the luminance information display screen 212 is arranged so as to be in a horizontal direction with respect to a figure (for example, a bar graph indicated by a reference numeral 221) representing content luminance information and a character string (for example, "display") for explaining being information indicating display luminance is arranged so as to be in a horizontal direction with respect to a figure (for example, a bar graph indicated by a reference numeral 222) representing display luminance information. The luminance value of the content indicates a luminance value (HDR content luminance information) of HDR content. The luminance value of the display indicates current maximum luminance that is set, for example, by adjusting maximum luminance that is able to be displayed by the display.

From the luminance value of the HDR content and the current setting value of the display, the user is able to intuitively recognize, through the figures, a ratio of the luminance (setting value of the display) that is able to be currently displayed by the display relative to the luminance (luminance value of the HDR content) to be originally represented. By pressing the setting screen call-up button 213 via the control device RC or the like as necessary in accordance with the display screen, the user is able to change display luminance of the display.

For example, here, the currently set setting value of the luminance of the display unit 15 is smaller than the luminance value of the HDR content and is smaller than the maximum luminance that is able to be displayed by the display unit 15. Thus, by the user pressing the setting screen call-up button 213 as necessary and changing the setting value of the luminance of the display unit 15 so as to make the setting value closer to the maximum luminance of the display unit 15, the content is able to be displayed with the setting value closer to the luminance value of the HDR content.

According to the embodiment described above, display is performed by changing a color or font of content information in accordance with a magnitude relationship between the maximum luminance of the content and the display luminance of the display, so that the user is able to easily recognize inconsistency between the luminance of the content and the luminance of the display. Moreover, since the display is able to be performed so that the magnitude relationship between the maximum luminance of the content and the display luminance of the display is able to be recognized, on the basis of such information that is displayed, the user is also able to adjust the luminance of the content and the luminance of the display, so that inconsistency of the luminance is solved and viewing in an optimum state is also able to be performed.

Note that, description has been given in the aforementioned embodiment for a case where the separation unit 172 separates broadcast program data and service information from multiplexed data that is a broadcast signal obtained from the broadcast reception unit 11 and that is demodulated by the demodulation unit 171. However, the separation unit 172 may obtain service information from data having information including the service information received via a network such as the Internet or obtain the service information from data obtained via an external input terminal such as HDMI (registered trademark).

Though a case where a display form is changed on the basis of a luminance value has been described in the aforementioned embodiment, a signal value indicating luminance may be used.

Though a case where the display unit is caused to perform display in a display form according to a relationship between video luminance information and display luminance data has been described in the aforementioned embodiment, sound in a form according to the relationship between the video luminance information and the display luminance data may be output from a speaker or the like. For example, the control unit 17 may cause the amplification unit 14 to output a message such as "luminance of a video exceeds luminance when the video is displayed on a display screen" by sound. That is, notification to a viewer may be performed by at least one of display on the screen or sound output from a speaker or the like.

The reception device 10 in the aforementioned embodiment may be realized by a computer. In this case, the reception device 10 may be realized by recording a program for realizing functions thereof in a computer-readable recording medium and causing a computer system to read the program recorded in the recording medium for execution. Note that, the "computer system" here is defined to include an OS and hardware components such as a peripheral device. Furthermore, the "computer-readable recording medium" refers to a portable medium such as a flexible disk, a magneto-optical disk, a ROM, and a CD-ROM, and a storage device such as a hard disk built into the computer system. Moreover, the "computer-readable recording medium" may include a medium that dynamically retains the program for a short period of time, such as a communication line that is used to transmit the program via a network such as the Internet or via a communication line such as a telephone line, and a medium that retains, in that case, the program for a certain time period, such as a volatile memory within the computer system which serves as a server or a client. Furthermore, the program may be configured to realize a part of the functions described above, and additionally may be configured to be capable of realizing the functions described above in combination with a program already recorded in the computer system, and may be configured to be realized by using a programmable logic device such as an FPGA (Field Programmable Gate Array).

As above, the embodiment of the invention has been described in detail with reference to the drawings, but the specific configuration is not limited to the embodiment and includes, for example, a design that falls within the gist of the invention.

### Industrial Applicability

Application to a content processing device, a television reception device, a method of processing information in the content processing device, and a program that enable easily recognizing of inconsistency between video luminance information and display luminance information is able to be performed.

### Reference Signs List

1 broadcasting system, 10 reception device, 11 broadcast reception unit, 12 input unit, 14 amplification unit, 15 display unit, 16 storage unit, 17 control unit, 171 demodulation unit, 172 separation unit, 173 sound processing unit, 174 video processing unit, 175 display processing unit, 176 SI processing unit, 177 display control unit, 178 channel tuning unit, 179 level control unit, 20 transmission device, 210 service information acquisition unit, 220 broadcast content acquisition unit, 230 multiplexing unit, 240 modulation unit, 250 transmission unit, BT broadcasting transfer path, BS broadcast satellite, RC control device

## Claims

1. A content processing device causing a display device connected thereto to output content, the content processing device comprising:
a first acquisition unit that acquires video luminance information included in the content from service information included in the content;
a second acquisition unit that acquires display luminance information in a case where the display device performs display; and
an information processing unit that notifies a viewer, who views the content, of information based on the video luminance information and the display luminance information via the display device.

2. The content processing device according to claim 1, wherein
the information processing unit
combines the information based on the video luminance information and the display luminance information with video data, and causes the display device to display the resultant on a screen in which information about the content is displayed.

3. The content processing device according to claim 1 or 2, further comprising
a display screen generation unit that, on a basis of the video luminance information and the display luminance information, generates a luminance information display screen in which display is performed in a display form according to a magnitude relationship between luminance indicated by the video luminance information and luminance indicated by the display luminance information, wherein
the information processing unit causes the display device to display the generated luminance information display screen together with the screen in which the information about the content is displayed.

4. The content processing device according to claim 3, wherein
the display screen generation unit
generates a luminance information display screen in which display is performed in a different display form in accordance with a ratio of the luminance indicated by the display luminance information relative to the luminance indicated by the video luminance information.

5. The content processing device according to claim 1, wherein
the information processing unit causes the display device to display the information based on the video luminance information and the display luminance information to be associated with content information in a program table of the content.

6. The content processing device according to any one of claims 1 to 5, wherein
the second acquisition unit
acquires the display luminance information from the display device or a storage region in which the display luminance information is stored.

7. The content processing device according to any one of claims 1 to 6, further comprising the display device.

8. A television reception device comprising:
a reception device that receives content;
a display device; and
a content processing device that causes the display device to output the received content, wherein
the content processing device includes
a first acquisition unit that acquires video luminance information included in the content from service information included in the content,
a second acquisition unit that acquires display luminance information in a case where the display device performs display, and
an information processing unit that notifies a viewer, who views the content, of information based on the video luminance information and the display luminance information via the display device.

9. A method of processing information in a content processing deice causing a display device connected thereto to output content, the method comprising the steps of:
acquiring, by a first acquisition unit, video luminance information included in the content from service information included in the content;
acquiring, by a second acquisition unit, from the display device, display luminance information in a case where the display device performs display; and
notifying, by an information processing unit, a viewer, who views the content, of information based on the video luminance information and the display luminance information via the display device.

10. A program causing a computer of a content processing device, which causes a display device connected thereto to output content, to execute the steps of:
acquiring video luminance information included in the content from service information included in the content;
acquiring, from the display device, display luminance information in a case where the display device performs display; and
notifying a viewer, who views the content, of information based on the video luminance information and the display luminance information via the display device.
